# EUROPÄISCHE PATENTSCHRIFT

(11) **EP 1 459 938 B1**
(45) Veröffentlichungstag und Bekanntmachung des Hinweises auf die Patenterteilung: **11.05.2005**
(21) Anmeldenummer: 04001652.9
(22) Anmeldetag: 27.01.2004
(51) Int. Cl.: B60R 13/04, F16B 5/12, F16B 2/24

(54) **Befestigungsvorrichtung zur lösbaren Festlegung eines Bauteils an einem Trägerteil**
Fastener for releasably attaching a member to a carrier
Dispositif destiné à la fixation détachable d'un élément sur une partie support

(30) Priorität: 10.03.2003 DE 10310624; 10.03.2003 DE 20303879 U
(43) Veröffentlichungstag der Anmeldung: 22.09.2004
(73) Patentinhaber: WKW Erbslöh Automotive GmbH, 42553 Velbert (DE)
(72) Erfinder: Bamberg, Klaus, 58256 Ennepetal (DE); Löwe, Stefan, 42389 Wuppertal (DE); Blomberg, Harald, 42349 Wuppertal (DE); Hoinka, Michael, 42579 Heiligenhaus (DE)
(74) Vertreter: Ludewig, Karlheinrich, Dipl.-Ing.

(56) Entgegenhaltungen:
- EP-A- 0 527 440
- EP-A- 1 146 235
- GB-A- 2 024 109

## Beschreibung

Die vorliegende Erfindung betrifft eine Befestigungsvorrichtung zur lösbaren Festlegung eines Bauteils an einem Trägerteil gemäß dem Oberbegriff des Anspruchs 1, insbesondere zur Befestigung einer Zierleiste an einem Trägerteil eines Kraftfahrzeuges, wobei die Zierleiste an ihrer Innenseite eine sich in Längsrichtung erstreckende C-Nut besitzt, in die ein Halteelement der Befestigungsvorrichtung eingreift. Zur lösbaren Festlegung der Zierleiste an einem Trägerteil weist die Befestigungsvorrichtung des Weiteren eine U-förmige Federklammer auf, mit welcher die Zierleiste auf das Trägerteil aufgeschoben und die Klemmverbindung hergestellt wird. Eine derartige Vorrichtung ist allgemein bekannt.

Um Zierleisten an einem Trägerteil, beispielsweise einem Karosserieteil eines Kraftfahrzeuges zu befestigen, sind eine Reihe von Befestigungsmöglichkeiten bekannt. Beispielsweise wird eine Zierleiste durch mindestens ein Haftmittel gemäß DE 199 21 143 A1 an einer festen Fläche befestigt. Eine Klebeverbindung hat jedoch den Nachteil, dass die Haftflächen der Zierleiste und des Trägerelements in aufwendiger Weise vorbehandelt werden müssen, um eine gute Haftung zu sichern. Des Weiteren hat eine solche Verbindung den Nachteil, dass sie nicht wieder lösbar ist.

Lösbare Befestigungsanordnungen für eine Zierleiste an einem Trägerteil bestehen typischerweise aus einer U-förmigen Federklammer zur Klemmverbindung mit dem Trägerteil. Zur Befestigung derartiger Federklammern werden an den Zierleisten, wie in der DE 199 39 554 gezeigt, durch Ausstanzung mehrere Durchbrechungen eingebracht. Diese Durchbrechungen dienen der Verrastung der Federklammern. Nachteilig bei derartigen Anordnungen ist die mechanische Vorbearbeitung des Zierleistenprofils durch Stanzen. Des Weiteren bilden die Durchbrechungen Undichtigkeitsstellen, die man vermeiden möchte.

Bei einer weiteren Befestigungsanordnung wurde auf die Ausstanzungen verzichtet und dafür an der Zierleiste ein Doppelsteg vorgesehen, der der Befestigung der Federklammer dient, die auf diesem Steg aufgeclipst wird. Abgesehen von der entsprechend größeren Bauhöhe einer solchen Zierleiste ist ein Profilquerschnitt mit einem Doppelsteg auch ungünstig für Zierleisten, die über ihre Längsausdehnung gebogen werden müssen.

Aufgabe der vorliegenden Erfindung ist es deshalb, eine Befestigungsvorrichtung zur lösbaren Festlegung eines Bauteils an einem Trägerteil anzugeben, die die bekannten Nachteile überwindet. Diese Aufgabe wird durch eine Befestigungsvorrichtung gemäß den Merkmalen des Anspruches 1 gelöst. Vorteilhafte Ausgestaltungen der Erfindung sind durch die Unteransprüche angegeben.

Erfindungsgemäß wird eine Befestigungsvorrichtung zur lösbaren Festlegung eines Bauteils an einem Trägerteil, insbesondere einer Zierleiste an einem Trägerteil eines Kraftfahrzeugs beschrieben. Die Zierleiste besitzt zur Aufnahme der Befestigungsvorrichtung an ihrer Innenseite eine sogenannte C-Nut, die in Längsrichtung durch obere und untere Stegleisten begrenzt ist, so dass sich hinter den oberen und unteren Stegleisten obere und untere Nuten ergeben. In diese Nuten greifen obere und untere Halteteile der Befestigungsvorrichtung ein. Diese oberen und unteren Halteteile bilden das Halteelement, welches einstückig an einem ebenen Basisteil angeformt ist. Dieses ebene Basisteil der Befestigungsvorrichtung bildet einen Federschenkel, der zur Klemmverbindung mit dem Trägerteil vorgesehenen U-förmigen Federklammer. Der zweite Schenkel wird durch einen vom ebenen Basisteil abragenden Federschenkel gebildet. Die erfindungsgemäße Befestigungsvorrichtung besteht demnach aus einem ebenen Basisteil, welches zum einen zu einer Federklammer verformt und zum anderen zu einem Halteelement ausgestaltet ist. Das erfindungsgemäße Befestigungselement zeichnet sich dadurch aus, dass es in einfacher Weise mit der Zierleiste verbunden werden kann, ohne dass die Zierleiste mechanisch bearbeitet werden muss oder zusätzliche Stege an der Zierleiste vorgesehen werden. Dazu besitzt die Befestigungsvorrichtung ein Halteelement, das so dimensioniert ist, dass es in Befestigungsposition mit seinen zwei gegenüberliegenden entgegengesetzt ausgerichteten Halteteilen jeweils die oberen und unteren Stegleisten hintergreift. In bevorzugter Weise wird das Halteelement so ausgestaltet, dass ausgehend von einem mittleren Bereich des Halteelements, der in der Ebene des Basisteils angeordnet ist, die zwei Halteteile so weit aus dieser Ebene herausgebogen werden, dass die Enden der Halteteile in einfacher Weise die oberen und unteren Stegleisten hintergreifen können. Das Halteelement besitzt demzufolge in der Befestigungsposition eine größere Breite, als die Öffnung in der Zierleiste. Die Breite des Halteelements entspricht dem Abstand der Stirnseiten der beiden Halteteile. Die beiden Halteteile gehen jeweils, ausgehend von der Stirnseite, über zwei Seitenkanten in den mittleren Bereich des Halteelements über, wobei die Seitenkanten schräg oder senkrecht zur Längsachse der Befestigungsvorrichtung verlaufen und der Abstand zweier gegenüberliegender Seitenkanten kleiner ist, als der Abstand der oberen und unteren Stegleiste, d.h. der Öffnung in der Zierleiste. Dadurch wird gewährleistet, dass die Befestigungsvorrichtung in gedrehter Position mit den beiden Halteteilen zwischen den Stegleisten positioniert und durch Drehung in eine Befestigungsposition gebracht werden kann. In gleicher Weise kann eine festgelegte Befestigungsvorrichtung durch Drehbewegung um den Mittelpunkt des Halteelements in eine Freigabeposition bewegt werden, wo die beiden Halteteile des Halteelements zwischen den Stegleisten heraushebbar sind. Damit wird in einfacher Weise eine Montage und Demontage der Befestigungsvorrichtung an einer beliebigen Stelle in Längsausdehnung der Zierleiste möglich. Des Weiteren besitzt diese Anordnung eine geringe Bauhöhe, da das Basisteil der Befestigungsvorrichtung bündig mit den Stegleisten der Zierleiste verlaufen kann, oder unmittelbar an den Stegleisten anliegt.

Durch Vorsehen einer vorzugsweise parallel zur Längsausdehnung des Befestigungselements vorgesehenen Abstützfläche des Basisteils, welche in Befestigungsposition an einem Teil der Zierleiste anliegt, beispielsweise an der Stirnseite einer Stegleiste, einem Flansch oder einer Rinne. Gegenüberliegend von einer solchen Abstützfläche kann zur besseren Fixierung der Befestigungsvorrichtung ein zusätzliches Arretierungsteil am Basisteil angeformt sein, welches in der Befestigungsposition eine Stegleiste hintergreift, oder sich an der Stirnseite einer Stegleiste abstützt.

Eine solche Befestigungsvorrichtung kann an einer beliebigen Stelle der Längsausdehnung der Zierleiste angeordnet werden. Für Anwendungsfälle, wo die Befestigungsvorrichtung an vorgegebenen Stellen in der Zierleiste fixiert werden soll, kann eine Befestigungsvorrichtung zusätzlich mit einem Rastfinger ausgerüstet werden, der beispielsweise in eine Kerbe an einer Stegleiste eingreifen kann und so eine Längsfixierung in der Zierleiste gewährleistet.

Einzelheiten der Erfindung werden anhand von in der Zeichnung dargestellten bevorzugten Ausführungsbeispielen, auf welche die Erfindung jedoch nicht beschränkt ist, beschrieben. Es zeigen:
- Fig. 1: in perspektivischer Darstellung eine Zierleiste mit eingesetzter Befestigungsvorrichtung,
- Fig. 2: eine Schnittdarstellung der Anordnung gemäß Fig. 1, aufgeclipst auf ein Trägerteil,
- Fig. 3: eine Vorderansicht einer erfindungsgemäßen Befestigungsvorrichtung,
- Fig. 4: eine Draufsicht auf die Befestigungsvorrichtung gemäß Fig. 3,
- Fig. 5: eine Seitenansicht der Befestigungsvorrichtung gemäß Fig. 3,
- Fig. 6: eine perspektivische Darstellung einer weiteren Anordnung einer erfindungsgemäßen Befestigungsvorrichtung in einer Zierleiste,
- Fig. 7: eine Schnittdarstellung durch die Anordnung gemäß Fig. 6 mit aufgestecktem Trägerteil,
- Fig. 8: eine Vorderansicht einer weiteren erfindungsgemäßen Befestigungsvorrichtung,
- Fig. 9: eine Seitenansicht der Befestigungsvorrichtung gemäß Fig. 8.

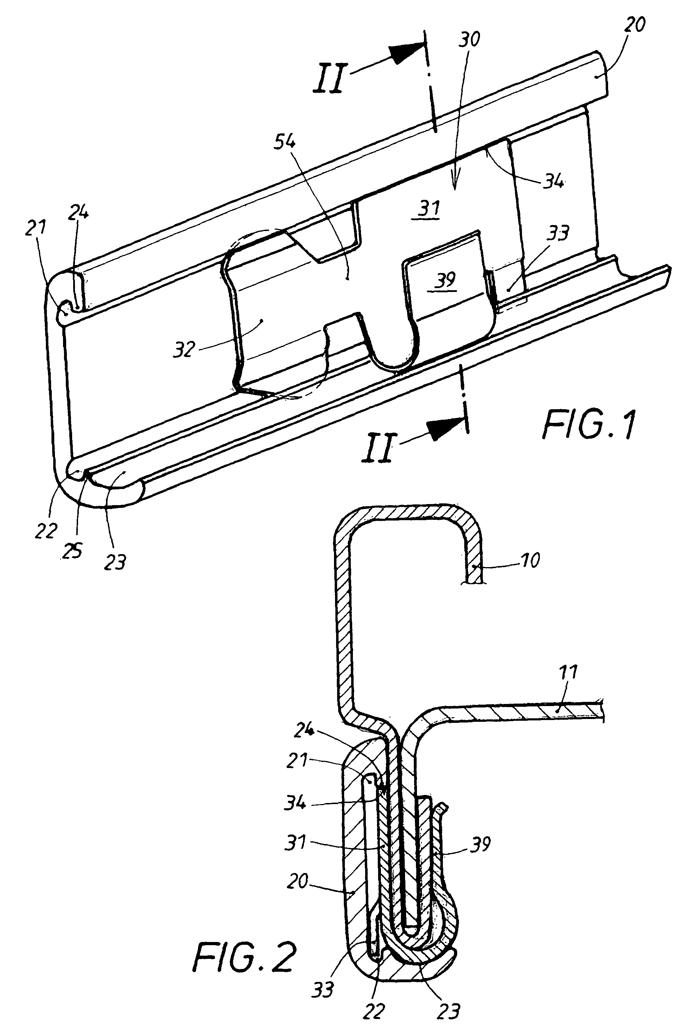

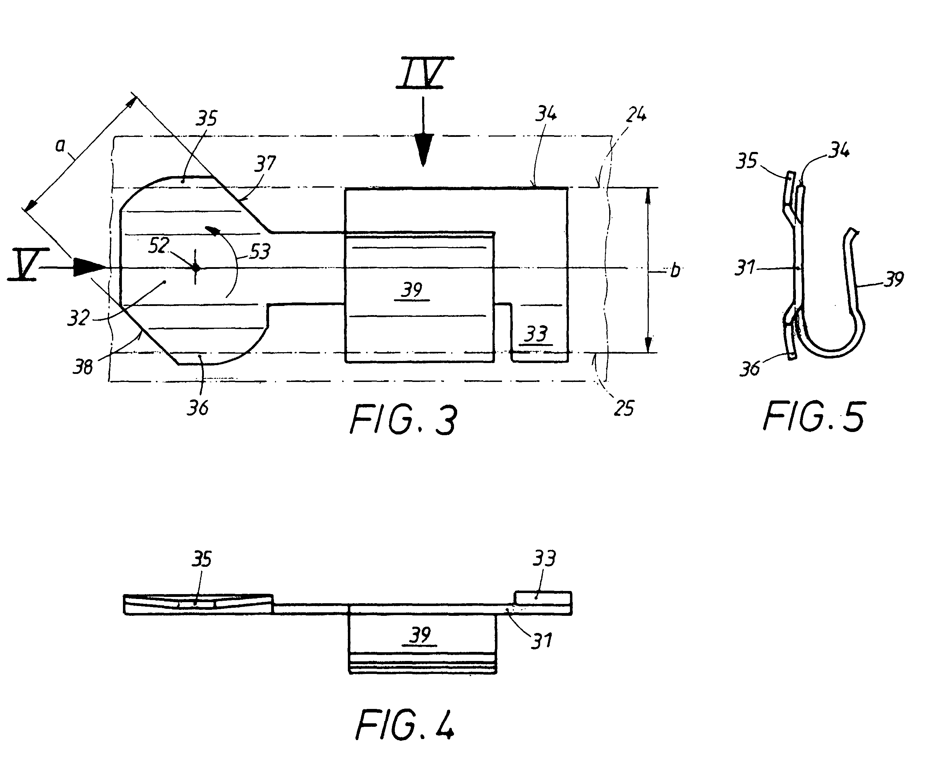

In den Fig. 1 bis 5 ist eine erste Ausführungsform der Erfindung dargestellt. Fig. 1 zeigt eine Zierleiste 20, in der eine Befestigungsvorrichtung 30 angeordnet ist. Mittels dieser Befestigungsvorrichtung 30 kann, wie aus Fig. 2 zu ersehen, die Zierleiste 20 an einem Trägerteil 10, beispielsweise einem flanschartigen Verbindungsbereich zweier Karosserieteile 10, 11, festgelegt werden. Typischerweise erfolgt die Befestigung an dem Trägerteil durch eine U-förmige Federklammer. Bei der Befestigungsvorrichtung 30 wird die U-förmige Federklammer durch ein ebenes Basisteil 31 und des Weiteren durch einen vom ebenen Basisteil 31 abragenden Federschenkel 39 gebildet. Die U-förmige Basis der Federklammer wird in diesem Beispiel in einer Rinne 23 der Zierleiste 20 aufgenommen und abgestützt. Die Befestigungsvorrichtung 30 ist aus einem ebenen Basisteil 31 aufgebaut und besitzt, wie am besten aus den Fig. 1 und 3 ersichtlich, in diesem Ausführungsbeispiel drei benachbarte Funktionsbereiche, nämlich das Halteteil 32, die Federklammer und einen Fixierungsbereich, gebildet durch ein Arretierungsteil 33 und eine Abstützungsfläche 34. Die Befestigungsvorrichtung 30 ist in der Fig. 1 in Befestigungsposition gezeigt. In dieser Befestigungsposition greifen zwei gegenüberliegende und in entgegengesetzte Richtung ausgerichtete Halteteile 35, 36 des Halteteils 32 in Nuten 21, 22 der Zierleiste 20 ein. Diese Nuten werden durch Stegleisten 24, 25 begrenzt. Diese Stegleisten 24, 25 sind in der Fig. 3 durch eine gestrichelte Linie angedeutet. Der Abstand b der Stegleisten 24, 25 entspricht der Größe der Aufnahmeöffnung für die Befestigungsvorrichtung 30. Die Befestigungsvorrichtung 30 besitzt im Wesentlichen in diesem Ausführungsbeispiel die gleiche Breite, wie der Abstand b der Stegleisten 24, 25, d.h. in Befestigungsposition greift das Arretierungselement 33 hinter eine Stegleiste 25 und legt die durch die Seitenkante des Basiselements 30 gebildete Abstützfläche 34 an einer Stegleiste 24 an. Dadurch wird eine zusätzliche Fixierung und Arretierung des Befestigungselements 30 erreicht. Wie am besten aus der Fig. 4 ersichtlich, besitzt die Befestigungsvorrichtung 30 eine sehr geringe Bauhöhe. Ausgehend vom ebenen Basisteil 31 ragt aus der Ebene dieses Basisteils heraus, zum einen der nach vorn abgebogene Federschenkel 39 für die Klemmverbindung mit dem Trägerteil 10 und 11. In Richtung der Zierleiste abgebogen sind zum einen das Arretierungsteil 33, welches auf diese Weise die Stegleiste 25 besser hintergreifen kann und zum anderen die Halteteile 35, 36 bzw. zumindest deren Enden 35, 36, die die Stegleiste 24 und 25 hintergreifen. Das Einsetzen der Befestigungsvorrichtung 30 in die Zierleiste 20 erfolgt durch eine einfache Drehbewegung. Ist die Befestigungsvorrichtung 30 einmal in der Zierleiste 20 festgelegt, verbleibt sie bei normalen Montage- und Demontagevorgängen der Zierleiste 20 in der Zierleiste 20, d.h. ändert ihre Position nicht, kann jedoch auch in einfacher Weise aus der Zierleiste 20 entfernt werden. Hierzu wird das Basisteil 31 im Bereich des Arretierungselements 33 leicht von der Zierleiste abgehoben, so dass das Arretierungselement 33 aus der Nut 22 herausgelöst wird und vor der Stegleiste 25 anliegt. Anschließend wird die Befestigungsvorrichtung 30 in Drehrichtung 53 um den Mittelpunkt 52 des Halteelements 32 bewegt, bis die schräg verlaufenden Seitenkanten 37, 38 parallel zur Längsausrichtung der Zierleiste 20 ausgerichtet sind. In dieser Position lässt sich die Befestigungsvorrichtung 30 aus der Zierleiste herausheben. Dies wird durch die Dimensionierung des Halteelements 32 ermöglicht. In der Befestigungsposition besitzt das Halteelement 32 eine Breite, die größer ist als der Abstand b' der Stegleisten 24, 25, so dass die Enden der Halteteile 35, 36 die Stegleisten 24, 25 der Zierleiste 20 hintergreifen. In der Freigabeposition, d.h. in der Position, wo die Seitenkanten 37, 38 parallel zur Längsausdehnung der Zierleiste 20 ausgerichtet sind, besitzt das Halteelement 32 eine Breite a, die in diesem Fall dem Abstand der parallel verlaufenden Seitenkanten 37, 38 entspricht und dieser Abstand a ist geringer als der Abstand b der Stegleisten 24, 25. Um mehr Freiraum für die Eindrehbewegung des Halteelements 32 zu haben, besitzt das ebene Basisteil 31 benachbart zum Halteelement einen Verengungsbereich 54. Wie insbesondere aus der Fig. 3 ersichtlich, besitzt nur die Seitenkante 37 des Halteelements 35 und die Seitenkante 38 des Halteelements 36 einen geraden Verlauf. Es ist selbstverständlich auch möglich, die gegenüberliegenden Seiten, die in diesem Fall konvex gewölbt sind, als gerade Seitenkanten auszubilden. Dies ist jedoch in den meisten Fällen nicht notwendig, da die Befestigungsvorrichtung in der Regel nur von einer Seite her in die Zierleiste 20 eingedreht werden kann. In der Fig. 1 wäre dies ein Einsetzen von oben her. Aus der anderen Richtung wäre ein Einsetzen nicht möglich, da hier die Rinne 23 der Zierleiste 20 der Eindrehbewegung im Wege ist. Für die Gestaltung der Halteteile 35, 36 ist es wichtig, dass sie so dimensioniert sind, dass zum einen in der Befestigungsposition das Halteelement 32 eine größere Breite als den Abstand b besitzt und zum anderen in einer Freigabeposition eine geringere Breite aufweist, nämlich den Abstand a. Der Abstand a zweier gegenüberliegender Seitenkanten 37, 38 wird in der Regel nur geringfügig kleiner als der Abstand b vorgesehen, damit das Halteteil 32 genügend Haltekräfte aufnehmen kann.

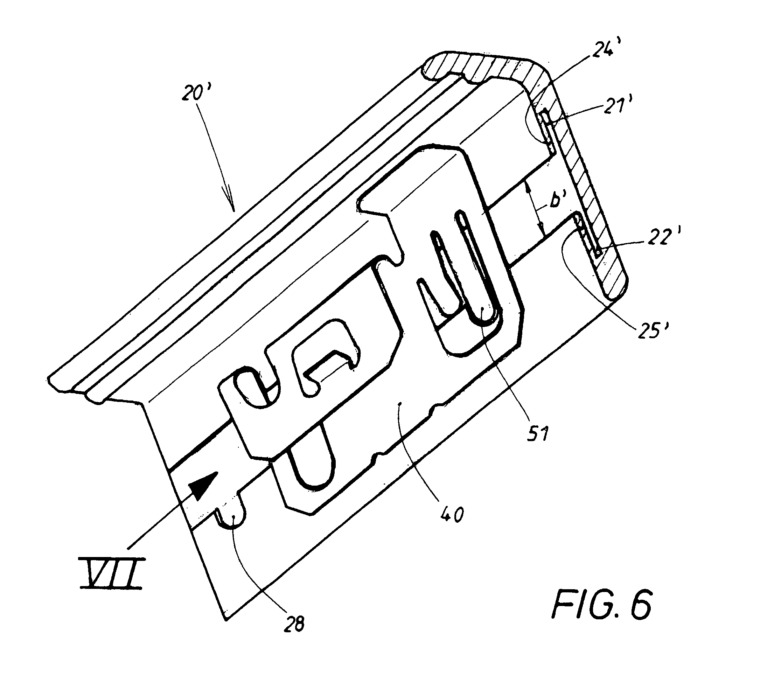

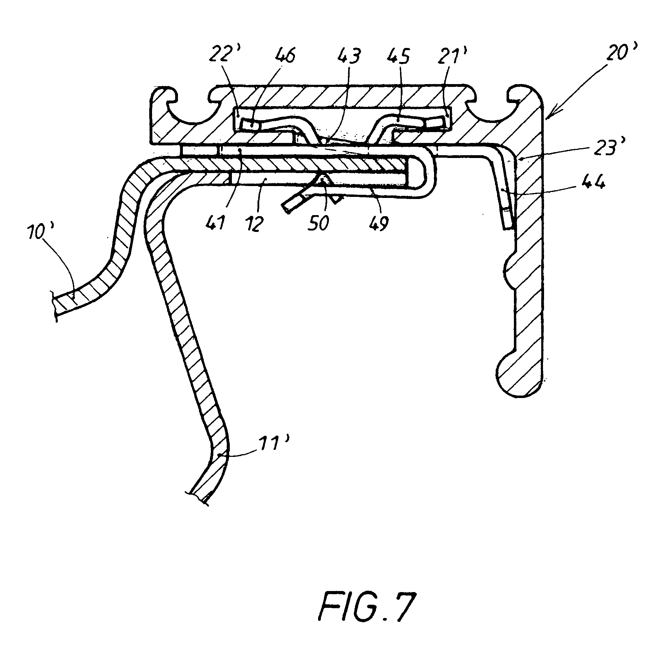

In den Fig. 6 bis 9 ist eine weitere Ausführungsform der Erfindung dargestellt. Fig. 6 zeigt eine Zierleiste 20' in der eine Befestigungsvorrichtung 40 angeordnet ist. Mittels dieser Befestigungsvorrichtung 40 kann, wie aus Fig. 7 zu ersehen ist, die Zierleiste 20' an einem Trägerteil, beispielsweise einem flanschartigen Verbindungsteil zweier Karosserieteile 10', 11' festgelegt werden. Typischerweise erfolgt die Befestigung an dem Trägerteil durch eine U-förmige Federklammer. Bei der Befestigungsvorrichtung 40 wird die U-förmige Federklammer durch ein ebenes Basisteil 41 der Befestigungsvorrichtung und des Weiteren durch einen zum ebenen Basisteil 41 abragenden Federschenkel 49 gebildet. In dem Federschenkel 49 ist des Weiteren eine zusätzliche Klemmzunge 50 vorgesehen, die in eine Ausnehmung des Karosserieblechs 11' eingreift und damit eine zusätzliche Sicherung der Klemmverbindung gewährleistet.

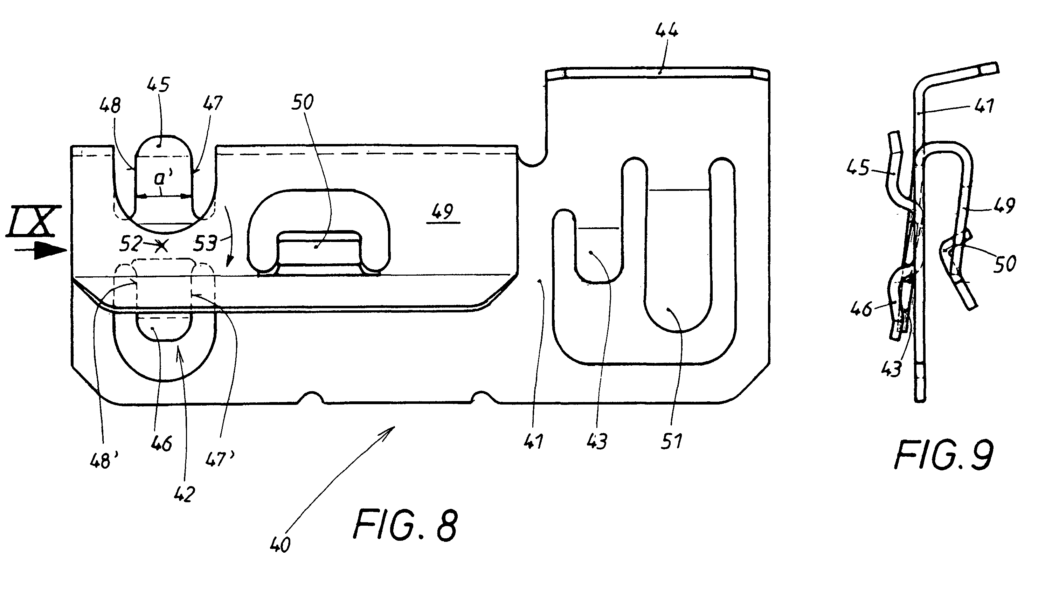

Die Befestigungsvorrichtung 40 ist aus einem ebenen Basisteil 41 aufgebaut und besitzt, wie am besten aus den Fig. 6 und 8 ersichtlich, drei benachbarte Funktionsbereiche, nämlich das Halteteil 42, die Federklammer und einen Fixierungsbereich, gebildet durch ein Arretierungsteil 43, die Abstützungsfläche 44 und den Rastfinger 51. Die Befestigungsvorrichtung 40 ist in der Fig. 6 in Befestigungsposition gezeigt. In dieser Befestigungsposition greifen zwei gegenüberliegende, in entgegengesetzte Richtung ausgerichtete Halteteile 45, 46 des Halteelements 42 in Nuten 21', 22' der Zierleiste 20' ein. Diese Nuten 21', 22' werden durch Stegleisten 24', 25' begrenzt. Diese Stegleisten 24', 25' besitzen einen Abstand b', der der Größe der Aufnahmeöffnung in der Zierleiste für die Befestigungsvorrichtung 40 entspricht. Die Befestigungsvorrichtung 40 besitzt auch in diesem Beispiel eine sehr geringe Bauhöhe, wenn gleich sie in diesem Fall nicht bündig zwischen den Stegleisten 24' und 25' der Zierleiste 20' angeordnet ist, sondern, wie der Fig. 7 zu entnehmen, unmittelbar an den Stegleisten 24', 25' anliegt. Die abgebogenen Halteteile 45 und 46 hintergreifen die Stegleisten 24' und 25' und der Federschenkel 49 ragt in entgegengesetzter Richtung vom ebenen Basisteil 41, welches an den Stegleisten 24', 25' anliegt, ab, um das Trägerteil 10' und das Karosserieblech 11' aufzunehmen. Des Weiteren ist in diesem Beispiel das Arretierungselement 43 geringfügig in Richtung der Zierleiste 20' abgebogen und stützt sich an der Stegleiste 25' ab. Es wäre auch möglich, das Arretierungsteil 43 so auszubilden, dass es diese Stegleiste 25' hintergreift.

Ebenso ist der Rastfinger 51 in Richtung der Zierleiste 20' abgebogen und greift, wie der Fig. 6 zu entnehmen, in eine Kerbe 28 der Stegleiste 25' ein. Hierdurch wird eine Längsfixierung der Befestigungsvorrichtung 40 in der Zierleiste 20' gewährleistet.

Das Einsetzen der Befestigungsvorrichtung 40 in die Zierleiste 20' erfolgt ebenfalls durch eine einfache Drehbewegung. Ist die Befestigungsvorrichtung 40 einmal in der Zierleiste 20' festgelegt, verbleibt sie bei normalen Montageund Demontagevorgängen der Zierleiste 20' in der Zierleiste 20', d.h. ändert ihre Position nicht, kann jedoch auch in einfacher Weise aus der Zierleiste 20' entfernt werden. Hierzu wird das Basisteil 30 im Bereich des Arretierungselementes 43 leicht von der Zierleiste abgehoben. Anschließend wird die Befestigungsvorrichtung 40 in Drehrichtung 53 um den Mittelpunkt 52 des Halteelements 42 bewegt, bis die Seitenkanten 47, 48, 47', 48' der Halteteile 45, 46 parallel zur Längsausrichtung der Zierleiste ausgerichtet sind. In dieser Position lässt sich die Befestigungsvorrichtung 40 aus der Zierleiste 20' herausheben. Dies wird durch die Dimensionierung des Halteelements 42 ermöglicht. Das Halteelement 42 besitzt nämlich eine Breite die größer ist als der Abstand b' der Stegleisten 24', 25', so dass die Enden der Halteteile 45, 46 die Stegleisten 24', 25' der Zierleiste 20' hintergreifen. In der Freigabeposition, d.h. in der Position, wo die Seitenkanten 47, 48 bzw. 47', 48' parallel zur Längsausdehnung der Zierleiste 20' ausgerichtet sind, besitzt das Halteelement 42 eine Breite a', die in diesem Fall dem Abstand der parallel verlaufenden Seitenkanten 47, 48 bzw. 47', 48' entspricht und dieser Abstand a' ist geringer als der Abstand b' der Seiten der Stegleisten 24', 25'.

Der Einsatz der Befestigungsvorrichtungen 30, 40 ist für verschiedene Arten von Zierleisten möglich, sowohl für eloxierte Zierleisten, als auch für Kunststoffleisten, da keine mechanische oder chemische Vorbearbeitung an der Zierleiste notwendig ist.

### Bezugszeichenliste :

- 10,10': Trägerteil
- 11,11': Karosserieblech
- 12: Ausnehmung
- 20,20': Bauteil, Zierleiste
- 21,21': obere Nut
- 22,22': untere Nut
- 23,23',23": Rinne
- 24,24': obere Stegleiste
- 25,25': untere Stegleiste
- 26: Außenwand
- 27: Stegleiste
- 28: Kerbe
- 30: Befestigungsvorrichtung
- 31: ebene Basis
- 32: Halteelement
- 3 3: Arretierungsteil
- 34: Abstützungsfläche
- 35: obere Halteteil
- 36: untere Halteteil
- 37: Seitenkante von 35
- 38: Seitenkante von 36
- 39: Federschenkel
- 40: Befestigungsvorrichtung
- 41: ebene Basis
- 42: Halteteil
- 43: Arretierungsteil
- 44: Abstützungsfläche
- 45: obere Halteteil
- 46: untere Halteteil
- 47,48: Seitenkanten von 45
- 47',48': Seitenkanten von 46
- 49: Federschenkel
- 50: Klemmzunge
- 51: Rastfinger
- 52: Mittelpunkt, Drehpunkt
- 53: Drehrichtung
- 54: Verengungsbereich

- a: Abstand von 37, 38
- a': Abstand von 47, 48 bzw. 47' ,48'
- b: Abstand von 24, 25
- b': Abstand von 24', 25'

## Patentansprüche

1. Befestigungsvorrichtung zur lösbaren Festlegung eines Bauteils (20, 20') an einem Trägerteil (10, 10'),
wobei das Bauteil (20, 20') an seiner Innenseite je eine sich in Längsrichtung erstreckende, durch Stegleisten (24, 25; 24', 25") begrenzte, obere und untere Nut (21, 22; 21', 22') besitzt und
die Befestigungsvorrichtung (30, 40) eine u-förmige Federklammer zur Klemmverbindung mit dem Trägerteil (10, 10') sowie ein Halteelement (32, 42) zur Festlegung an dem Bauteil (20, 20') besitzt,
**dadurch gekennzeichnet, dass**
die Befestigungsvorrichtung (30, 40) aus einem ebenen Basisteil (31, 41) aufgebaut ist,
wobei die Federschenkel der Federklammer zur Klemmverbindung mit dem Trägerteil (10, 10') durch das ebene Basisteil (31, 41) und einen vom ebenen Basisteil (31, 41) abragenden Federschenkel (39, 49) gebildet werden und
benachbart zu der Federklammer an dem ebenen Basisteil (31, 41) einstückig das Halteelement (32, 42) angeformt ist,
wobei das Halteelement (32, 42) so dimensioniert ist, dass es in Befestigungsposition mit seinen zwei gegenüberliegenden Halteteilen (35, 36; 45, 46) jeweils die Stegleisten (24, 25; 24', 25') hintergreift und in einer weiteren um den Mittelpunkt (52) des Halteelements (32, 42) gedrehten Freigabeposition zwischen den Stegleisten (24, 25; 24', 25') heraushebbar ist.

2. Befestigungsvorrichtung nach Anspruch 1, **dadurch gekennzeichnet, dass** das Halteelement (32, 42) in der Befestigungsposition eine größere Breite aufweist als der Abstand (b, b') der Stegleisten (24, 25; 24', 25').

3. Befestigungsvorrichtung nach einem der Ansprüche 1 bis 2, **dadurch gekennzeichnet, dass** die zwei gegenüberliegenden Halteteile (35, 36; 45, 46) des Halteelements (32, 42) aus der Ebene des Basisteils (31, 41) herausgebogen sind.

4. Befestigungsvorrichtung gemäß Anspruch 3, **dadurch gekennzeichnet, dass** in der Befestigungsposition die Stegleisten (24, 25) und das Basisteil (31) bündig verlaufen.

5. Befestigungsvorrichtung nach einem der Ansprüche 1 bis 4, **dadurch gekennzeichnet, dass** in der Befestigungsposition eine Abstützfläche (34, 44) des Basisteils (31, 41) an einem Bereich oder einer Leiste oder einer Rinne des Bauteils (20,20') anliegt.

6. Befestigungsvorrichtung nach einem der Ansprüche 1 bis 5, **dadurch gekennzeichnet, dass** am Basisteil (31, 41) ein zusätzliches Arretierungsteil (33, 43) gegenüberliegend der Abstützfläche (34, 44) vorgesehen ist, welches in der Befestigungsposition die Stegleiste (25, 25') hintergreift oder an der Stirnseite der Stegleiste (25, 25') anliegt.

7. Befestigungsvorrichtung nach einem der Ansprüche 1 bis 6, **dadurch gekennzeichnet, dass** das Arretierungsteil (33) aus der Ebene des Basisteils (31) herausgebogen ist.

8. Befestigungsvorrichtung nach einem der Ansprüche 1 bis 7, **dadurch gekennzeichnet, dass** das Halteteil (35) eine gerade Seitenkante (37) und das Halteteil (36) eine zu der Seitenkante (37) parallel verlaufende gerade Seitenkante (38) besitzt, wobei der Abstand (a) der Seitenkanten (37, 38) voneinander kleiner ist als der Abstand (b) der Stegleisten (24, 25).

9. Befestigungsvorrichtung gemäß Anspruch 8, **dadurch gekennzeichnet, dass** die Seitenkanten (37, 38) schräg zur Längsachse der Befestigungsvorrichtung (30) verlaufen.

10. Befestigungsvorrichtung nach einem der Ansprüche 1 bis 7, **dadurch gekennzeichnet, dass** das Halteteil (45, 46) nahezu senkrecht zur Längsachse der Befestigungsvorrichtung (30) verlaufende Seitenkanten (47, 47'; 48, 48') besitzt, wobei der Abstand (a') der gegenüberliegenden Seitenkanten (47, 48; 47', 48') voneinander kleiner ist als der Abstand (b') der Stegleisten (24', 25').

11. Befestigungsvorrichtung nach einem der Ansprüche 1 bis 10, **dadurch gekennzeichnet, dass** am Basisteil (41) zur Längsfixierung der Befestigungsvorrichtung (40) im Bauteil (20') ein Rastfinger (51) vorgesehen ist, der in eine an der Stegleiste (25') eingebrachte Kerbe (28) eingreifen kann.

12. Befestigungsvorrichtung nach einem der Ansprüche 1 bis 11, **dadurch gekennzeichnet, dass** am Federschenkel (49) eine Klemmzunge (50) vorgesehen ist, die in eine Ausnehmung am Träger (10') oder an einem mit dem Träger (10') zu einem Flansch verbundenen Karosserieblech (11') einrastbar ist.

13. Verwendung einer Befestigungsvorrichtung nach einem der vorhergehenden Ansprüche zur losbaren Befestigung einer Zierleiste (20, 20') an einem Trägerteil (10, 10') eines Kraftahrzeugs.

## Claims

1. Fixing device for releasably fixing a component (20, 20') to a carrier (10, 10'),
the component (20, 20') having, on its inside, upper and lower grooves (21, 22; 21', 22') extending in the longitudinal direction and delimited by strips (24, 25; 24', 25"), and
the fixing device (30, 40) has a U-shaped spring clamp for clamping to the carrier (10, 10') and a retaining element (32, 42) for fixing to the component (20, 20'),
**characterised in that** the fixing device (30, 40) is made up of a planer base part (31, 41),
the spring arms of the spring bracket for clamping to the carrier (10, 10') being formed by the planer base part (31, 41) and a spring arm (39, 49) projecting from the planer base part (31, 41) and
adjacent to the spring clamp on the planer base part (31, 41) the retaining element (32, 42) is integrally formed,
the retaining element (32, 42) being of such dimensions that in the fixing position it engages with its two opposing retaining parts (35, 36; 45, 46) behind the strips (24, 25; 24', 25') and in a position of release which is rotated further about the centre (52) of the retaining element (32, 42) it can be lifted out between the strips (24, 25; 24', 25').

2. Fixing device according to claim 1, **characterised in that** the retaining element (32, 42) in the fixing position is wider than the spacing (b, b') between the strips (24, 25; 24', 25').

3. Fixing device according to one of claims 1 and 2, **characterised in that** the two opposing retaining members (35, 36; 45, 46) of the retaining element (32, 42) are bent out of the plane of the base part (31, 41).

4. Fixing device according to claim 3, **characterised in that** in the fixing position the strips (24, 25) and the base part (31) run flush with one another.

5. Fixing device according to one of claims 1 to 4, **characterised in that** in the fixing position a support surface (34, 44) of the base part (31, 41) abuts on a region or a strip or a channel of the component (20, 20').

6. Fixing device according to one of claims 1 to 5, **characterised in that** on the base part (31, 41) is provided an additional locking member (33, 43) opposite the support surface (34, 44), which engages behind the strip (25, 25') or abuts on the end face of the strip (25, 25') in the fixing position.

7. Fixing device according to one of claims 1 to 6, **characterised in that** the locking member (33) is bent out of the plane of the base part (31).

8. Fixing device according to one of claims 1 to 7, **characterised in that** the retaining part (35) has a straight side edge (37) and the retaining part (36) has a straight side edge (38) running parallel to the side edge (37), while the spacing (a) of the side edges (37, 38) from one another is less than the spacing (b) of the strips (24, 25).

9. Fixing device according to claim 8, **characterised in that** the side edges (37, 38) run diagonally to the longitudinal axis of the fixing device (30).

10. Fixing device according to one of claims 1 to 7, **characterised in that** the retaining member (45, 46) has side edges (47, 47'; 48, 48') extending substantially perpendicularly to the longitudinal axis of the fixing device (30), the spacing (a') between opposing side edges (47, 48; 47', 48') being less than the spacing (b') of the strips (24', 25').

11. Fixing device according to one of claims 1 to 10, **characterised in that** on the base part (41), for longitudinal fixing of the fixing device (40) in the component (20'), a latching finger (51) is provided which can engage in a notch (28) formed on the strip (25').

12. Fixing device according to one of claims 1 to 11, **characterised in that** on the spring arm (49) is provided a clamping tongue (50) which is capable of latching in a recess in the carrier (10') or on a metal body (11') connected to the carrier (10') to form a flange.

13. Use of a fixing device according to one of the preceding claims, for releasably fastening a decorative strip (20, 20') to a carrier (10, 10') in a motor vehicle.

## Revendications

1. Dispositif de fixation pour la fixation désolidarisable d'un composant (20, 20') sur une partie support (10, 10'),
où le composant (20, 20') comprend sur sa face intérieure, respectivement, une rainure supérieure et inférieure (21, 22 ; 21', 22'), les rainures s'étendant en direction longitudinale et étant délimitées par des bandes formant nervures (24, 25 ; 24', 25'), et
le dispositif de fixation (30, 40) comprenant une pince élastique en forme de U, pour assurer une liaison par serrage à la partie support (10, 10'), ainsi qu'un élément de maintien (32, 42) pour assurer la fixation au composant (20, 20'),
**caractérisé en ce que**
le dispositif de fixation (30, 40) est formé d'une partie de base (31, 41) plane,
où la branche élastique de la pince élastique, devant assurer la liaison par serrage à la partie support (10, 10'), est formée par la partie de base (31, 41) plane et une branche élastique (39, 49), en saillie de la partie de base (31, 41) plane, et
l'élément de maintien (32, 42) étant formé d'un seul tenant par la matière sur la partie de base (31, 41) plane, au voisinage de la pince élastique,
où l'élément de maintien (32, 42) est dimensionné de manière que, à la position de fixation, par ses deux parties de maintien (35, 36 ; 45, 46) opposées, il saisisse par l'arrière chaque fois les bandes formant nervures (24, 25 ; 24', 25') et puisse être ressorti entre les bandes formant nervures (24, 25 ; 24', 25'), en une autre position de libération, tournée autour du centre (52) de l'élément de maintien (32, 42).

2. Dispositif de fixation selon la revendication 1, **caractérisé en ce que** l'élément de maintien (32, 42) présente, à la position de fixation, une largeur supérieure à l'espacement (b, b') entre les bandes formant nervures (24, 25 ; 24', 25').

3. Dispositif de fixation selon l'une des revendications 1 à 2, **caractérisé en ce que** les deux parties de maintien (35, 36 ; 45, 46) opposées de l'élément de maintien (32, 42) sont ressorties, par pliage, hors du plan de la partie de base (31, 41).

4. Dispositif de fixation selon la revendication 3, **caractérisé en ce que**, à la position de fixation, les bandes formant nervures (24, 25) et la partie de base (31) se raccordent de manière affleurée.

5. Dispositif de fixation selon l'une des revendications 1 à 4, **caractérisé en ce qu'**à la position de fixation, une face d'appui (34, 44) de la partie de base (31, 41) appuie sur une zone ou une bande ou une goulotte de la partie de base (20, 20').

6. Dispositif de fixation selon l'une des revendications 1 à 5, **caractérisé en ce que**, sur la partie de base (31, 41), est prévue une partie de blocage (33, 43) supplémentaire, à l'opposé de la face d'appui (34, 44), la partie de blocage, à la position de fixation, saisissant par l'arrière la bande formant nervure (25, 25') ou appuyant sur la face frontale de la bande formant nervure (25, 25').

7. Dispositif de fixation selon l'une des revendications 1 à 6, **caractérisé en ce que** la partie de blocage (33) est sortie par pliage hors du plan de la partie de base (31).

8. Dispositif de fixation selon l'une des revendications 1 à 7, **caractérisé en ce que** la partie de maintien (35) comprend une arête latérale (37) rectiligne et la partie de maintien (36) comprend une arête latérale (38) rectiligne, s'étendant parallèlement à arête latérale (37), l'espacement mutuel (a) entre les arêtes latérales (37, 38) étant inférieur à l'espacement (b) entre les bandes formant nervures (24, 25).

9. Dispositif de fixation selon la revendication 8, **caractérisé en ce que** les arêtes latérales (37, 38) s'étendent obliquement par rapport à l'axe longitudinal du dispositif de fixation (30).

10. Dispositif de fixation selon l'une des revendications 1 à 7, **caractérisé en ce que** la partie de maintien (45, 46) comprend des arêtes latérales (47, 48 ; 47', 48'), s'étendant à peu près à angle droit par rapport à l'axe longitudinal du dispositif de fixation (30), l'espacement mutuel (a') des arêtes latérales (47, 47'; 48, 48') opposées étant inférieur à l'espacement (b') entre les bandes formant nervures (24', 25').

11. Dispositif de fixation selon l'une des revendications 1 à 10, **caractérisé en ce qu'**un doigt d'encliquetage (51), pouvant s'engager dans une entaille (28) ménagée sur la bande formant nervure (25'), est prévu sur la partie de base (41) pour assurer la fixation longitudinale du dispositif de fixation (40) dans la partie de base (20').

12. Dispositif de fixation selon l'une des revendications 1 à 11, **caractérisé en ce qu'**une languette de serrage (50), susceptible d'être encliquetée dans un évidement ménagé sur le support (10') ou sur une tôle de carrosserie (11'), reliée au support (10') pour former une semelle de bride, est prévue sur la branche élastique (49).

13. Utilisation d'un dispositif de fixation selon l'une des revendications précédentes, pour la fixation désolidarisable d'une bande décorative (20, 20') sur une partie support (10, 10') d'un véhicule automobile.
